# EUROPÄISCHE PATENTSCHRIFT

(11) **EP 3 705 868 B1**
(45) Veröffentlichungstag und Bekanntmachung des Hinweises auf die Patenterteilung: **28.02.2024**
(21) Anmeldenummer: 19161284.5
(22) Anmeldetag: 07.03.2019
(51) Int. Cl.: G01N 1/06, G01N 1/28, G01N 1/42, G01N 35/00, G01N 1/36

(54) **HISTOLOGIEGERÄT MIT AUTOMATISCHER ANALYSE**
HISTOLOGY DEVICE WITH AUTOMATIC ANALYSIS
APPAREIL D'HISTOLOGIE À ANALYSE AUTOMATIQUE

(43) Veröffentlichungstag der Anmeldung: 09.09.2020
(73) Patentinhaber: Siemens Healthineers AG, 91301 Forchheim (DE)
(72) Erfinder: Heismann, Björn, 91058 Erlangen (DE)
(74) Vertreter: Siemens Healthineers Patent Attorneys

(56) Entgegenhaltungen:
- WO-A1-2008/078527
- WO-A1-2018/094290
- JP-B2- H0 797 069
- US-A- 5 156 019
- US-A1- 2002 106 626
- US-B2- 7 503 248

## Beschreibung

Die vorliegende Erfindung betrifft eine Vorrichtung zur Analyse einer Probe eines Patienten sowie ein Verfahren zur Analyse einer Probe eines Patienten unter Verwendung der Vorrichtung.

Die histologische Befundung von Gewebe ist zentraler Bestandteil der klinischen Diagnostik. Sie wird weltweit in pathologischen Abteilungen und Praxen durchgeführt.

In der Praxis treten mehrere Probleme auf:
1. Die Netto-Befundungszeit beträgt typischerweise 4-10 Tage, je nach Nähe und Geschwindigkeit der Pathologie. Ein Hauptgrund für die erhebliche Zeitdauer sind viele manuelle Prozessschritte in der histologischen Aufarbeitung und den angrenzenden Prozessen. Insbesondere die vielen Schritte zur Probenpräparation sind manuell aufwändig und verlängern die Gesamtprozesszeit erheblich.
2. Die Histopathologie hat darüber hinaus ein Sampling-Problem. Eine typische Gewebeprobe ist einige mm bis Zentimeter groß und wird üblicherweise mit 10 um Schnitten befundet. Dabei werden typischerweise nicht Hunderte von Schnitte präpariert und unter dem Lichtmikroskop einzeln befundet, sondern nur einzelne Schnitte selektiert. Dies hat zur Folge, dass potentielle Fehldiagnosen auftreten, da schlicht nicht die gesamte Probe angeschaut wird.
3. Zudem sind Analysetätigkeiten wie das Zählen von Zellen in der Immunohistologie für menschliche Befunde extrem anstrengend und fehleranfällig.

Das obige erste Problem der langen Prozessdauer ist besonders bei der Bestimmung von Tumorgrenzen während eines chirurgischen Eingriffs von hoher Relevanz.

Deshalb gibt es die Technik der sogenannten Schnellschnitte.

Die Schnellschnittuntersuchung, kurz auch Schnellschnitt genannt, umfasst hierbei eine pathologische Untersuchung von Gewebeproben während einer noch laufenden Operation. Da von den Ergebnissen der Schnellschnittuntersuchung die weitere Operationstaktik abhängen kann, werden Schnellschnitte bevorzugt behandelt, wobei hierzu auch ein eigenes Labor vorhanden sein kann.

Bei einem Schnellschnitt wird dem Pathologen die Gewebeprobe direkt aus dem Operationssaal überbracht. Von der Gewebeprobe werden dann Gefrierschnitte angefertigt, die umgehend gefärbt und begutachtet werden, wonach eine Mitteilung an den Operateur erfolgt. Von der Ankunft der Gewebeprobe in der Pathologie bis zur Befundmitteilung vergehen etwa 10 bis 15 Minuten.

Die morphologische Qualität von Gefrierschnitten ist jedoch üblicherweise schlechter als die von nicht unter Zeitdruck hergestellten Schnitten, insbesondere solchen, welche paraffineingebettet und mit Formalin fixiert sind. Es ist hier also zwischen einem schnellen Ergebnis und einer hohen Qualität abzuwägen. Zudem sind Schnellschnitte auch mit zusätzlichem Aufwand und Kosten verbunden.

Ein weiterer Punkt, der bei Schnellschnitten Beachtung findet, ist das Vorhandensein von ansteckenden Krankheiten (z.B. HIV) eines Patienten, da die Gewebeprobe selbst beim Gefrieren infektiös bleibt, so dass ein besonderes Augenmerk auf die Hygiene zu legen ist. Üblicherweise werden deshalb Gefriermikrotome bei Schnellschnitten im Anschluss abgetaut und desinfiziert.

Um Zeit und Kosten zu sparen, ist eine Automatisierung von Schnitten, insbesondere Schnellschnittuntersuchungen, erstrebenswert.

Hierzu gibt es Ansätze, einzelne Teile bei der Schnittherstellung zu automatisieren.

So offenbart beispielsweise die US 2017/0284904 A1 eine Vorrichtung und ein Verfahren zum automatischen Schneiden eines Gewebes, beinhaltend das Schneiden und Transferieren vom Mikrotom, beispielsweise auf einen Objektträger.

Zudem sind in der US 2016/0139007 A1 ein Verfahren und eine Vorrichtung zum Sammeln eines dünnen Gewebes beschrieben, welches von einem Mikrotom oder Ähnlichem geschnitten sein kann.

Die US 5 156 019 A offenbart eine Vorrichtung zum Schneiden von Gewebeschnitten aus einer gefrorenen Probe zur mikroskopischen Analyse.

Die WO 2008/078527 A1 betrifft eine Detektionsvorrichtung für magnetische Spurenmittel und ein Verfahren zur Detektion magneischer Mittel.

In der US 2002/106626 A1 ist eine Vorrichtung beschrieben, die zur Konstruktion von Microarrays von gefrorenem Gewebe geeignet ist.

Die WO 2018/094290 A1 betrifft Systeme und Verfahren zum Transport und Verarbeiten von sektionierten biologischen Proben.

Die JP H0797069 B2 offenbart ein Verfahren zur Herstellung von kontinuierlichen dünnen Schnitten für ein Mikroskop durch Sammeln, Bewegen oder Übertragen eine Vielzahl dünner Schnitte, welche durch Schneiden eines Objekts mit einem Messer in einer Ebene hergestellt wurden.

Es besteht jedoch ein Bedarf, eine Befundung einer Probe, insbesondere einer Gewebeprobe, weiterhin zu automatisieren, um eine schnelle Befundung insbesondere bei Schnellschnitten ohne zusätzlichen Personalaufwand zu ermöglichen.

### Zusammenfassung der Erfindung

Es wurde gefunden, dass mit einer erfindungsgemäßen Vorrichtung eine schnelle Auswertung einer Probe und sogar eine 3D-Auswertung der Probe, insbesondere einer Gewebeprobe, ermöglicht werden kann, welche unter geringem Aufwand und/oder automatisch ablaufen kann.

In einem ersten Aspekt betrifft die vorliegende Erfindung eine Vorrichtung zur Analyse einer Probe eines Patienten, umfassend:
- eine Aufnahmeeinrichtung für eine Trägerplatte, auf der die Probe positioniert werden kann, die dazu ausgebildet ist, eine Trägerplatte mit einer darauf positionierten Probe aufzunehmen;
- mindestens eine Kühleinrichtung, die dazu ausgebildet ist, die Trägerplatte mit der Probe auf eine Temperatur von 0°C oder weniger zu kühlen, um bevorzugt eine gefrorene Probe herzustellen;
- optional einen Fördermechanismus zur Beförderung der Trägerplatte mit der gefrorenen Probe von der Kühleinrichtung zu einer Schnitteinheit, der dazu ausgebildet ist, die Trägerplatte mit der gefrorenen Probe von der Kühleinrichtung zur Schnitteinheit zu befördern;
- eine Schnitteinheit, die dazu ausgebildet ist, eine Vielzahl von Schnitten der Probe herzustellen und die Probe sukzessive zu schneiden, wobei die Schnitteinheit dazu ausgebildet ist, die Probe komplett zu schneiden;
- eine Übertrageeinheit, die dazu ausgebildet ist, die Vielzahl von Schnitten alle auf einen Träger matrixartig zu übertragen; und
- mindestens eine Analyseeinrichtung, die dazu ausgebildet ist, die Vielzahl von Schnitten zu analysieren und ein Analyseergebnis zu erstellen,

weiter umfassend eine Auswerteeinheit, die dazu ausgebildet ist, das Analyseergebnis auszuwerten, optional umfassend eine Reporteinrichtung, welche dazu ausgebildet ist, einen Report des Analyseergebnisses auszugeben,
wobei die Auswerteeinheit dazu ausgebildet ist, bei der Auswertung eines Schnitts auch Daten von einer Auswertung eines benachbarten Schnitts in Betracht zu nehmen, und die Vielzahl von Schnitten mittels Verfahren der dreidimensionalen Mustererkennung auszuwerten.

Zudem offenbart ist ein Verfahren zur Analyse einer Probe eines Patienten mit Hilfe der erfindungsgemäßen Vorrichtung, umfassend:
- Bereitstellen der Probe des Patienten;
- Positionieren der Probe auf eine Trägerplatte;
- Einbringen der Trägerplatte mit der Probe in die Aufnahmeeinrichtung;
- Kühlen der Probe in der Kühleinrichtung auf eine Temperatur von 0°C oder weniger;
- optional Befördern der Probe von der Kühleinrichtung zur Schnitteinheit;
- sukzessives Schneiden der Probe mit der Schnitteinheit zur Herstellung einer Vielzahl von Schnitten, wobei die Probe mit der Schnitteinheit komplett geschnitten wird;
- matrixartiges Übertragen von allen der Vielzahl von Schnitten mit der Übertrageeinheit auf einen Träger; und
- Analysieren der Vielzahl von Schnitten der Probe mit der mindestens einen Analyseeinrichtung und Erstellung eines Analyseergebnisses, wobei das Analyseergebnis mit einer Auswerteeinheit automatisch ausgewertet wird und ein Auswertungsergebnis erstellt wird, optional wobei ein Report des Auswertungsergebnisses mit einer Reporteinrichtung ausgegeben wird,

wobei bei der Auswertung eines Schnitts auch Daten von einer Auswertung eines benachbarten Schnitts in Betracht genommen
werden, und die Auswertung mittels Verfahren der dreidimensionalen Mustererkennung erfolgt.

Weitere Aspekte der vorliegenden Erfindung sind den abhängigen Ansprüchen und der detaillierten Beschreibung zu entnehmen.

### Beschreibung der Figuren

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.

Figur 1 zeigt schematisch eine erfindungsgemäße Vorrichtung.

In Figur 2 ist schematisch der Ablauf eines erfindungsgemäßen Verfahrens gezeigt.

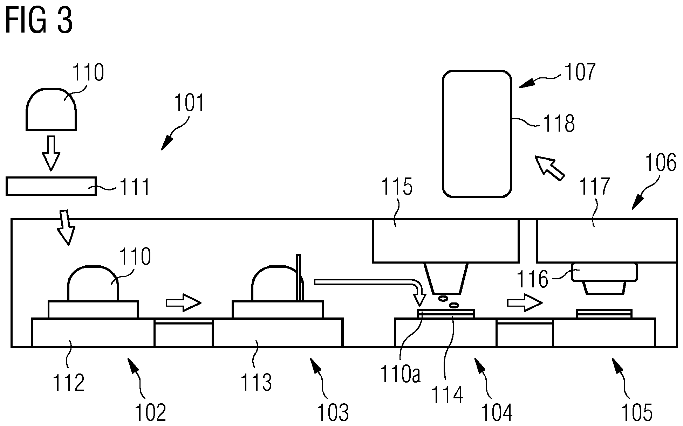

Darüber hinaus ist in Figur 3 schematisch ein Verfahren eines Beispiels der vorliegenden Erfindung gezeigt.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Eine Probe im Sinne der vorliegenden Erfindung ist nicht besonders beschränkt, so sie von einem Patienten stammt. Insbesondere ist die Probe zumindest teilweise fest, und ist bevorzugt eine Gewebeprobe, welche beispielsweise bei einer Biopsie entnommen wurde.

In einem ersten Aspekt betrifft die vorliegende Erfindung eine Vorrichtung zur Analyse einer Probe eines Patienten, umfassend:
- eine Aufnahmeeinrichtung für eine Trägerplatte, auf der die Probe positioniert werden kann, die dazu ausgebildet ist, eine Trägerplatte mit einer darauf positionierten Probe aufzunehmen;
- mindestens eine Kühleinrichtung, die dazu ausgebildet ist, die Trägerplatte mit der Probe auf eine Temperatur von 0°C oder weniger zu kühlen, um bevorzugt eine gefrorene Probe herzustellen;
- optional einen Fördermechanismus zur Beförderung der Trägerplatte mit der gefrorenen Probe von der Kühleinrichtung zu einer Schnitteinheit, der dazu ausgebildet ist, die Trägerplatte mit der gefrorenen Probe von der Kühleinrichtung zur Schnitteinheit zu befördern;
- eine Schnitteinheit, die dazu ausgebildet ist, eine Vielzahl von Schnitten der Probe herzustellen und die Probe sukzessive zu schneiden, wobei die Schnitteinheit dazu ausgebildet ist, die Probe komplett zu schneiden;
- eine Übertrageeinheit, die dazu ausgebildet ist, die Vielzahl von Schnitten alle auf einen Träger matrixartig zu übertragen; und
- mindestens eine Analyseeinrichtung, die dazu ausgebildet ist, die Vielzahl von Schnitten zu analysieren und ein Analyseergebnis zu erstellen,
weiter umfassend eine Auswerteeinheit, die dazu ausgebildet ist, das Analyseergebnis auszuwerten, optional umfassend eine Reporteinrichtung, welche dazu ausgebildet ist, einen Report des Analyseergebnisses auszugeben.

Die Aufnahmeeinrichtung für eine Trägerplatte, auf der die Probe positioniert werden kann, ist erfindungsgemäß nicht besonders beschränkt. Die Aufnahmeeinrichtung kann eine Öffnung in der Vorrichtung und/oder eine Platzierungsstelle für die Trägerplatte sein, z.B. eine Vertiefung und/oder markierte Stelle, kann aber auch unmarkiert sein. Es ist auch nicht ausgeschlossen, dass die Aufnahmeeinrichtung zumindest teilweise in weiteren Bestandteilen der erfindungsgemäßen Vorrichtung integriert ist, z.B. in der Kühleinrichtung und/oder dem optionalen Fördermechanismus, beispielsweise auf einem Teil der Oberfläche des optionalen Fördermechanismus, z.B. auf einen Förderband, auf dem entsprechend eine Stelle für die Trägerplatte markiert sein kann.

Ebenso ist die Trägerplatte, die in der erfindungsgemäßen Vorrichtung verwendet werden kann bzw. im erfindungsgemäßen Verfahren Anwendung findet, oder auch ein Bestandteil der Vorrichtung sein kann, nicht besonders beschränkt. Es kann sich hierbei auch um eine Schale (tray) handeln, aber auch eine Platte, einen Objektträger, etc. Das Material der Trägerplatte ist erfindungsgemäß nicht besonders beschränkt. Gemäß bestimmten Ausführungsformen umfasst die Trägerplatte zumindest teilweise ein Metall und/oder eine Legierung oder besteht aus einem Metall und/oder eine Legierung, um den Wärmewiderstand zu verringern, wobei das Metall und/oder die Legierung nicht besonders beschränkt sind und beispielsweise Fe, Sn, Cu, Al und/oder Legierungen davon umfasst. Ebenso oder alternativ kann die Trägerplatte gemäß bestimmten Ausführungsformen eine geringe Dicke, z.B. von 5 mm oder weniger, bevorzugt 3 mm oder weniger, weiter bevorzugt 2 mm oder weniger z.B. 1 mm oder weniger oder 0,5 mm oder weniger, aufweisen, um eine gute Kühlung zu ermöglichen. Sie ist insbesondere so dünn wie mechanisch möglich. Durch entsprechende Ausführungen dient die Trägerplatte insbesondere einer effektiven Kühlung der Probe. Insbesondere dient die Trägerplatte alternativ oder zudem dazu, dass die Probe nicht mit entsprechenden Bestandteilen der Probe wie der Aufnahmeeinrichtung, der mindestens einen Kühleinrichtung und dem optionalen Fördermechanismus zur Beförderung der Trägerplatte direkt in Kontakt tritt. Auch stellt die Trägerplatte insbesondere eine wohldefinierte Fläche, insbesondere für die Beförderung der Probe, dar.

Darüber hinaus ist die mindestens eine Kühleinrichtung, die dazu ausgebildet ist, die Trägerplatte mit der Probe auf eine Temperatur von 0°C oder weniger zu kühlen, um bevorzugt eine gefrorene Probe herzustellen, auch nicht besonders beschränkt. Mindestens eine Kühleinrichtung dient in der erfindungsgemäßen Vorrichtung dazu, die Probe auf eine Temperatur zu kühlen, bei der diese schnittfähig wird, also mit der Schnitteinheit geschnitten werden kann, wobei hierzu die Probe bevorzugt zumindest teilweise oder ganz eingefroren wird.

Es ist auch nicht ausgeschlossen, dass die gesamte Vorrichtung mit der mindestens einen Kühleinrichtung gekühlt wird, aber es ist auch möglich, dass nur Teile der Vorrichtung gekühlt werden, z.B. nur die mindestens eine Kühleinrichtung selbst oder die mindestens eine Kühleinrichtung, sowie die Schnitteinheit und/oder die optionale Übertrageeinheit und/oder die Analyseeinrichtung und/oder die Aufnahmeeinrichtung. Die Kühleinrichtung kann auch lokal begrenzt sein.

Gemäß bestimmten Ausführungsformen ist die mindestens eine Kühleinrichtung dazu ausgebildet, die Trägerplatte mit der Probe auf eine Temperatur von unter 0°C, bevorzugt -5°C oder weniger, weiter bevorzugt -10°C oder weniger, noch weiter bevorzugt -15°C oder weniger, z.B. -20°C oder weniger, zu kühlen. Die exakte Temperatur von null Grad Celsius oder weniger hängt dabei beispielsweise von der diagnostischen Aufgabe und/oder der mechanischen und ggf. chemischen Verarbeitung in den folgenden Schritten ab. Auch kann eine Kühlung der Trägerplatte mit der Probe mit mehreren Kühleinrichtungen stufenweise erfolgen.

Die Kühlung mit der mindestens einen Kühleinrichtung kann hierbei auf geeignete Weise erfolgen und ist nicht besonders beschränkt. Beispielsweise kann eine Kühlung mit einem geeigneten Medium in festem, flüssigen und/oder gasförmigen Zustand erfolgen, z.B. mit einem flüssigen Gas, bevorzugt inertem Gas, wie flüssigem Stickstoff, und/oder mit Kohlendioxidschnee und/oder gekühlter Luft, etc. Gemäß bestimmten Ausführungsformen ist mindestens eine Kühleinrichtung, insbesondere die Kühleinrichtung zum Kühlen der Trägerplatte mit der Probe, ein Peltier-Kühler, da hierbei keine beweglichen Teile und/oder Flüssigkeiten wie Kühlmittel und/oder flüssiger Stickstoff, etc., notwendig sind. Gemäß bestimmten Ausführungsformen ist die mindestens eine Kühleinrichtung, die dazu ausgebildet ist, die Trägerplatte mit der Probe auf eine Temperatur von 0°C oder weniger zu kühlen, mindestens ein Peltier-Kühler.

Gemäß bestimmten Ausführungsformen können in der erfindungsgemäßen Vorrichtung auch zwei oder mehr Kühleinrichtungen vorgesehen sein, z.B. eine Kühleinrichtung zum Kühlen der Trägerplatte mit der Probe und ggf. des optionalen Fördermechanismus und eine Kühleinrichtung zum Kühlen der Schnitteinheit, etc. Es ist also nicht ausgeschlossen, dass die erfindungsgemäße Vorrichtung neben der Kühleinrichtung, die Trägerplatte mit der Probe zu kühlen, eine oder mehrere weitere Kühleinrichtung(en) aufweist, beispielsweise eine Kühleinrichtung, die dazu ausgebildet ist, die Schnitteinheit zumindest teilweise zu kühlen, beispielsweise die Klinge in einem Mikrotom.

Weiterhin ist der eine optionale Fördermechanismus zur Beförderung der Trägerplatte mit der gefrorenen Probe von der Kühleinrichtung zu einer Schnitteinheit, der dazu ausgebildet ist, die Trägerplatte mit der gefrorenen Probe von der Kühleinrichtung zur Schnitteinheit zu befördern, nicht besonders beschränkt. Der optionale Fördermechanismus kann hierbei beispielsweise ein Förderband, ein Greifarm, ein Schlitten, etc. sein. Auch kann der optionale Fördermechanismus in einzelne Abschnitte unterteilt sein, welche auch separat angesteuert werden können, um z.B. ein Verweilen bei der mindestens einen Kühleinrichtung, die dazu ausgebildet ist, die Trägerplatte mit der Probe zu kühlen, um nachdem die Trägerplatte mit der Probe dorthin befördert wurde, und anschließend die Trägerplatte mit der Probe zur Schnitteinheit weiter befördert wird, wobei der optionale Fördermechanismus hier auch auf die Schnitteinheit angepasst sein kann, beispielsweise hinsichtlich der Schnittgeschwindigkeit, so mehrere Schritte gemacht werden. Gemäß bestimmten Ausführungsformen umfasst die erfindungsgemäße Vorrichtung den Fördermechanismus zur Beförderung der Trägerplatte mit der gefrorenen Probe von der Kühleinrichtung zu einer Schnitteinheit, der dazu ausgebildet ist, die Trägerplatte mit der gefrorenen Probe von der Kühleinrichtung zur Schnitteinheit zu befördern.

Auch ist es nicht ausgeschlossen, dass in der erfindungsgemäßen Vorrichtung mindestens ein weiterer optionaler Fördermechanismus vorgesehen ist, um z.B. mindestens einen Schnitt auf z.B. einem Träger zu mindestens einer Analyseeinrichtung zu befördern, welche also dazu ausgebildet ist, mindestens einen Schnitt, ggf. auf einem Träger, zu mindestens einer Analyseeinrichtung zu befördern.

In der erfindungsgemäßen Vorrichtung ist zudem die Schnitteinheit, die dazu ausgebildet ist, mindestens einen Schnitt der Probe herzustellen, nicht besonders beschränkt. Beispielsweise ist die Schnitteinheit ein Mikrotom, welches hinsichtlich der Ausgestaltung nicht besonders beschränkt ist. Der Schnitt kann also beispielsweise mechanisch erfolgen, z.B. mit einem Messer, wie in einem Schlittenmikrotom oder einem Rotationsmikrotom, und/oder der Schnitt kann auf andere Weise erfolgen, z.B. mit einem Laser. Mit der Schnitteinheit können Schnitte von beliebiger Dicke von der Probe geschnitten werden, wobei die Schnitte hinsichtlich der Schnittrichtung nicht besonders beschränkt sind, und die Schnitte beispielsweise vertikal, schräg oder horizontal erfolgen können. Die Schnittdicke kann beispielsweise in einem Bereich von 0,1 - 30 um, bevorzugt 0,5 bis 20 um, insbesondere 1 bis 10 um betragen, wobei diese geeignet eingestellt werden kann, beispielsweise durch einen entsprechenden Vortrieb zumindest eines Teils des optionalen Fördermechanismus und/oder eine geeignete Bewegung der Schnitteinheit.

Die Schnitteinheit ist dazu ausgebildet, eine Vielzahl von Schnitten, also 2, 3, 4, 5, 6, 7, 8, 9, 10 oder mehr, 20 oder mehr, 50 oder mehr, oder 100 oder mehr, herzustellen, wobei die Schnitteinheit dazu ausgebildet ist, die Probe komplett zu schneiden. Die Übertrageeinheit, die in dieser Ausführungsform vorhanden ist, ist dazu ausgebildet, die Vielzahl von Schnitten alle auf einen Träger zu übertragen. Die Herstellung der Vielzahl von Schnitten erfolgt hierbei durch sukzessives Schneiden der Probe. Hierbei entstehen bei Probengrößen im Millimeter- bis Zentimeter-Bereich einige Hundert bis einige tausend Gewebeschnitte, z.B. bei einer Dicke der Schnitte von 1 bis 10 um. Die Schnitteinheit ist dazu ausgebildet, die Probe sukzessive zu schneiden, und es werden alle Schnitte auf einen Träger aufgebracht, mit der Übertrageeinheit übertragen, und dann mit der mindestens einen Analyseeinrichtung analysiert. Hierdurch kann die Probe dreidimensional und im Wesentlichen vollständig oder vollständig untersucht werden. Dies ist insbesondere beispielsweise für eine genaue Klassifikation eines Tumors und/oder sine vollständige Entfernung vorteilhaft, da neben dem Tumorgewebe auch Randbereiche charakterisiert werden können, mit denen z.B. ein hinreichender Abstand des Tumors zu den Grenzen einer entnommenen Gewebeprobe bei einer Biopsie bestimmt werden kann, um dem Operateur Rückinformation über den Erfolg der Operation geben zu können.

Ebenso ist die Übertrageeinheit, die dazu ausgebildet ist, die Vielzahl von Schnitten alle auf einen Träger zu übertragen, nicht besonders beschränkt. Die Übertrageeinheit dient dazu, die Vielzahl von Schnitten auf einen Träger zu übertragen, wobei der Träger nicht besonders beschränkt ist und beispielsweise ein Objektträger sein kann. Der Träger kann aus einem beliebigen Material bestehen, z.B. aus Glas und/oder Kunststoff, wobei der Träger bevorzugt im Wesentlichen nicht oder nicht mit einer Analyse in der mindestens einen Analyseeinrichtung interferiert, z.B. für eine bestimmte Beobachtungswellenlänge bei einer optischen Analyse undurchlässig ist.

Die Übertrageeinheit kann die Vielzahl von Schnitten beispielsweise auf einen Träger ablegen.

Die Übertrageeinheit ist dazu ausgebildet, die Vielzahl von Schnitten matrixartig auf einen Träger zu übertragen. Dies kann beispielsweise über eine "Pick and Place" Mechanik erfolgen. Hierbei ist bevorzugt der Träger größer ausgebildet, um für die Vielzahl von Schnitten entsprechend Platz zu haben, beispielsweise mit einer Größe von mehreren bis mehreren 10 Quadratzentimetern.

Dies hat mehrere Vorteile:
a) Die Schnitte können auf dem Träger Wartezeiten überdauern, ohne aufwändige Kassettensysteme o.ä. für einzelne Glasträger bauen zu müssen.
b) Die Matrixanordnung ermöglicht eine platzoptimierte parallele Weiterverarbeitung in den folgenden Prozessschritten.
c) Die Schnitte können für eine Biobank o.ä. platzsparend archiviert werden.

Weiterhin ist die mindestens eine Analyseeinrichtung, die dazu ausgebildet ist, die Vielzahl von Schnitten zu analysieren und ein Analyseergebnis zu erstellen, erfindungsgemäß nicht besonders beschränkt. Beispielsweise kann hier bevorzugt mindestens eine optische Analyseeinrichtung wie zumindest Teile eines Mikroskops, eine, z.B. digitale, Kamera, etwa eine digitale mikroskopische Kamera, etc. als Analyseeinrichtung dienen. Eine optische Analyseeinrichtung kann beispielsweise dazu ausgebildet sein, eine Vielzahl von Schnitten, bevorzugt auch gleichzeitig, mit mindestens einer Wellenlänge oder einem Wellenlängenbereich, bevorzugt mehreren Wellenlängen oder mehreren Wellenlängenbereichen, zu analysieren. Als Wellenlängen bzw. Wellenlängenbereiche eignen sich alle technisch möglichen. Neben sichtbarem Licht kommen beispielsweise auch spektrale Bänder im Infraroten und UV wie auch im Teraherz-Bereich (z.B. Teraherz-Bänder) in Frage. Die mindestens eine Analyseeinrichtung ist jedoch nicht auf optische Analyseeinrichtungen beschränkt, und auch andere Analyseeinrichtungen, welche beispielsweise Dichten von Zellen, etc. bestimmen können, können Anwendung finden.

Die erfindungsgemäße Vorrichtung umfasst weiter eine Auswerteeinheit, die dazu ausgebildet ist, das Analyseergebnis auszuwerten. Diese ist nicht besonders beschränkt. Die Auswerteeinheit ist ein Computer, Prozessor o.Ä. mit einer Software, welche eine Auswertung des Analyseergebnisses, gemäß eine Mustererkennungs-Software vornimmt, welche Bilder einer optischen Analyseeinrichtung auswertet. Hierbei kann die Auswerteeinheit auch eine Vielzahl von Analyseergebnissen bei einer Vielzahl von Schnitten, insbesondere mit hoher Geschwindigkeit, mittels Verfahren der Mustererkennung und unter Verwendung von künstlicher Intelligenz auswerten. Die Verfahren zur Mustererkennung wie auch die verwendete künstliche Intelligenz sind hierbei nicht besonders beschränkt. Mustererkennung von histo-pathologischen Proben an sich ist wohlbekannt und es existieren zahlreiche Lösungen, mittels klassischer Mustererkennung und speziell Deep-Learning Pathologien zu erkennen und zu quantifizieren.

Bei der Auswertung einer Vielzahl von Schnitten, und wenn die Probe mit der Schnitteinheit komplett geschnitten wird, ergeben sich jedoch besondere Vorteile.

Die Histologie wird damit dreidimensional und anders als in der gängigen Praxis prinzipiell vollständig durchgeführt. Damit können Pathologien und Zellverteilungen in der gesamten Probe diagnostiziert werden. Dies ist überaus wichtig, da als Resultat nicht nur ein pathologischer Befund in einem Schnitt ermittelt wird, sondern die vollständige dreidimensionale Auswertung der Probe möglich wird.

Dabei kann beispielsweise ein Algorithmus bei der Auswertung auch daran Nutzen ziehen, dass bei einem Befund in einem Schnitt auch die Nachbarschnitte eine höhere Befundwahrscheinlichkeit vorliegt. Erfindungsgemäß gelangt man zu einer dreidimensionalen Mustererkennung, ein Schritt, der technisch und diagnostisch mit dem Schritt von der Schnitt CT zur tomografischen 3D CT vergleichbar ist. Erfindungsgemäß nimmt daher die Auswerteeinheit bei der Auswertung eines Schnitts auch Daten von einer Auswertung eines benachbarten Schnitts in Betracht.

Gemäß bestimmten Ausführungsformen umfasst eine erfindungsgemäße Vorrichtung eine Reporteinrichtung, welche dazu ausgebildet ist, einen Report des Analyseergebnisses auszugeben. Ein Report kann beispielsweise von der Auswerteeinheit automatisch generiert werden und beispielsweise als Daten auf beliebige Art und Weise mit Hilfe der Reporteinrichtung ausgegeben werden, beispielsweise in Form einer Darstellung auf einem Bildschirm und/oder in Form eines Ausdrucks, etc. Der Report kann mit Hilfe der Reporteinrichtung beispielsweise in Zusammenfassung und/oder als optische ja/nein Information an der Vorrichtung gezeigt und optional in digitaler Form an entsprechende Systeme, z.B. EMR (Electronical Medical Record) oder Histo-PACS-Systeme (PACS = Patient Archiving System), übermittelt werden.

Gemäß bestimmten Ausführungsformen umfasst eine erfindungsgemäße Vorrichtung weiter mindestens eine Auftrageeinheit für eine Schutzschicht, die dazu ausgebildet ist, eine Schutzschicht auf die Vielzahl von Schnitten auf dem einen Träger aufzutragen. Die mindestens eine Auftrageeinheit für eine Schutzschicht ist, so vorhanden, somit im Verfahrensverlauf nach der Schnitteinheit vorgesehen, also irgendwo zwischen der Schnitteinheit und der Analyseeinrichtung, bevorzugt zwischen der optionalen Übertrageeinheit und der Analyseeinrichtung. Die Auftrageeinheit für eine Schutzschicht ist nicht besonders beschränkt, und kann beispielsweise Düsen, Dispenser, etc. umfassen. Mit dem Auftrag einer Schutzschicht kann die Vielzahl von Schnitten auf dem Träger langzeitstabil gehalten werden und gleichzeitig können z.B. infektiöse Anteile aus Gewebeflüssigkeiten (z.B. Bakterien oder HIV-Viren) sicher isoliert und abgetötet werden. Auch kann hierbei die Vielzahl von Schnitten zusätzlich auf dem Träger fixiert werden. Die Schutzschicht ist hierbei nicht besonders beschränkt, ist jedoch bevorzugt derart vorgesehen, dass sie mit einer Analyse in der Analyseeinrichtung im Wesentlichen nicht interferiert oder bevorzugt nicht interferiert. So ist beispielsweise ein Polymerfilm als Schutzschicht geeignet, der bevorzugt im Wesentlichen transparent für sichtbares Licht, UV-Licht und/oder Infrarot-Licht ist.

Gemäß bestimmten Ausführungsformen umfasst eine erfindungsgemäße Vorrichtung weiter mindestens eine Desinfektionseinheit, die dazu ausgebildet ist, zumindest Teile der Vorrichtung, welche mit der Probe in Berührung kommen, zu desinfizieren. Die mindestens eine Desinfektionseinheit kann natürlich auch weitere Teile der erfindungsgemäßen Vorrichtung desinfizieren und ist nicht besonders beschränkt. Beispielsweise kann die mindestens eine Desinfektionseinheit ein UV-Gerät und/oder ein Plasma-Gerät wie eine UV- und/oder Plasmalampe, ein UV-und/oder Plasma-Laser, eine chemische Desinfektionseinheit, etc. sein. Mit der Desinfektion, z.B. einer Plasma- und/oder UV-Exposition, in der Vorrichtung können beispielsweise die Trägerplatte, der mindestens eine Träger, und/oder Bestandteile der Vorrichtung wie z.B. die Schnitteinheit, die Übertrageeinheit, ggf. die mindestens eine Kühleinrichtung und/oder ggf. die mindestens eine Analyseeinrichtung desinfiziert bzw. gereinigt werden.

Gemäß bestimmten Ausführungsformen umfasst eine erfindungsgemäße Vorrichtung weiter mindestens eine Zuführeinrichtung für mindestens ein Reagens, die dazu ausgebildet ist, mindestens ein Reagens auf die Vielzahl von Schnitten aufzutragen, bevor die Vielzahl von Schnitten in der Analyseeinrichtung analysiert wird. Das mindestens eine Reagens ist hierbei nicht besonders beschränkt und umfasst beispielsweise Färbereagenzien, z.B. solche, welche üblicherweise in der Histopathologie Anwendung finden, wie etwa Hämatoxylin und/oder Eosin z.B. in der HE-Färbung, die Reagenzien bei der Azanfärbung (Mallory-Trichrom-Färbung), der Van-Gieson-Färbung und/oder der Masson-Goldner-Trichrom-Färbung, etc. Die Probe kann also beispielsweise mit einer gewünschten Färbung versehen werden. Auch die mindestens eine Zuführeinrichtung für das mindestens eine Reagens ist nicht besonders beschränkt und kann beispielsweise Düsen, Dispenser, etc. umfassen, welche auch für eine automatische Auftragung ausgeführt sein können, z.B. mit entsprechenden Zuleitungen für das mindeste eine Reagens, Ventilen zur Abstimmung der Zugabemenge des mindestens einen Reagens, etc. Auch können mehrere Zuführeinrichtungen für mindestens ein Reagens vorgesehen sein, beispielsweise für verschiedene Färbereagenzien/Färbemittel. Beispielsweise kann eine automatisierte Dispenser-Einrichtung eine vorbestimmte Menge eines Färbemittels und/oder mehrerer Färbemittel auf die Gewebeprobe auftragen. Hierbei können die Färbemittel ggf. auch für einige Minuten einwirken. Die Pathologie definiert sich in vielen Fällen über die Art der gewählten Färbung, sodass hier in der Vorrichtung auch entsprechend gemäß bestimmten Ausführungsformen mindestens eine Aufnahmeöffnung für mindestens einen Behälter umfassend mindestens ein Färbereagenz umfasst, welche dazu ausgebildet ist, mindestens einen Behälter umfassend mindestens ein Färbereagenz derart aufzunehmen, dass das mindestens eine Färbereagenz der mindestens einen Zuführeinrichtung für mindestens ein Reagens zugeführt werden kann.

Weiterhin kann die erfindungsgemäße Vorrichtung mindestens ein Bedienfeld umfassen, mit dem ein bestimmtes Verfahren zur Analyse einer Probe eines Patienten automatisch in der Vorrichtung nach Platzieren der Trägerplatte mit der Probe gestartet werden kann, umfassend mindestens einen Knopf und/oder ein Bedienfeld zum Starten des Verfahrens und ggf. weitere Bedienfelder zum Einstellen verschiedener Parameter für das Verfahren, z.B. einer Kühltemperatur, einer Schnittdicke, einer ggf. Reagenzzugabe, z.B. einer Färbung, einer bestimmten Auswertung, und/oder einer bestimmten Art der Auswertung und/oder Anzeige davon. Hierbei kann beispielsweise auch angegeben werden, dass eine Vielzahl von Schnitten durchgeführt werden soll, also eine 3D-Analyse der Probe durchgeführt werden soll, z.B. eine 3D-Tumoranalyse, z.B. bei einem frisch resektierten Tumorgewebe. Die Bedienfelder können hierbei beispielsweise auf bestimmte medizinische Fragestellungen angepasst sein, welche z.B. die genaue Klassifikation eines Tumors und seine vollständige Entfernung umfassen können, aber auch eine Analyse einer Probe auf Vorhandensein von Pathogenen, etc. Darüber hinaus kann das mindestens eine Bedienfeld auch mindestens ein Ausgabefeld umfassen, das beispielsweise mit der Reporteinheit verbunden werden kann und beispielsweise Ergebnisse der Analyse anzeigen kann und/oder nur ein optisches Zeichen, welches angibt, dass die Probe eine gewünschte Qualität aufweist, beispielsweise dass ein Tumor vollständig entfernt wurde und ein hinreichender Abstand vom Tumor zum Rand der Probe, hier z.B. einer Gewebeprobe, vorliegt. Beispielsweise kann die Analyse hier auch einfach "grünes Licht" geben, das an der Vorrichtung in einem Bedienfeld auch im wörtlichen Sinne angezeigt werden kann. Insbesondere kann mit der erfindungsgemäße Vorrichtung also beispielsweise eine dreidimensionale Vermessung einer Tumorentität in einer Probe, bevorzugt inklusive einer Zellcharakterisierung und/oder der gesunden Ränder, vorgenommen werden.

Mit der erfindungsgemäßen Vorrichtung kann insbesondere eine vollständige und automatisierte Durchführung eines histopathologischen Prozesses in einem einzelnen autarken Gerät durchgeführt werden, wobei hier beispielsweise anhand einer medizinischen Fragestellung auch geeignete medizinische Reagenzien, wie etwa Färbereagenzien, als Verbrauchsmaterialien zugegeben werden können.

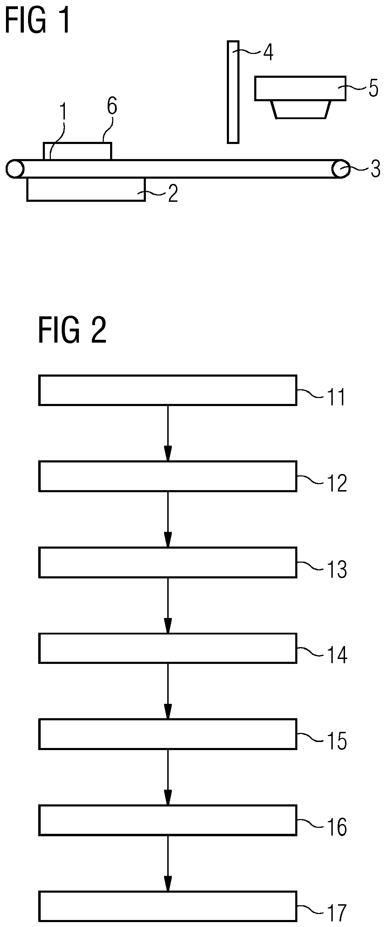

Eine beispielhafte erfindungsgemäße Vorrichtung ist schematisch in Fig. 1 gezeigt. Die in Fig. 1 gezeigte Vorrichtung umfasst hierbei eine Aufnahmeeinrichtung 1 für eine Trägerplatte 6, welche hier als Aufnahmestelle auf einem Fördermechanismus 3, hier einem Förderband, gezeigt ist. Auf dem Förderband kann eine Probe auf der Trägerplatte 6 zunächst mit der Kühleinrichtung 2 gekühlt werden, bevor sie dann der Schnitteinheit 4, hier beispielhaft ein Mikrotom, mittels des Fördermechanismus 3 zugeführt werden kann. Die in der Schnitteinheit 4 hergestellten Schnitte können dann mit einer Analyseeinrichtung 5 analysiert werden. Im Hinblick auf den in Fig. 1 gezeigten schematischen Aufbau sind jedoch einige Abwandlungen möglich, die bereits oben detaillierter aufgeführt wurden. So kann beispielsweise der Fördermechanismus 3 nicht bis zur Analyseeinrichtung 5 reichen und/oder separiert sein, um beispielsweise keinen Einfluss der Schnittgeschwindigkeit auf die Analyse zu haben, und/oder es können weitere Bestandteile wie eine Auswerteeinheit, eine Reporteinrichtung, optional eine Übertrageeinheit, eine Auftrageeinheit für eine Schutzschicht, eine Desinfektionseinheit und/oder mindestens eine Zuführeinrichtung für mindestens ein Reagens vorgesehen werden.

In einem weiteren Aspekt betrifft die vorliegende Erfindung ein Verfahren zur Analyse einer Probe eines Patienten mit Hilfe der erfindungsgemäßen Vorrichtung, umfassend:
- Bereitstellen der Probe des Patienten;
- Positionieren der Probe auf eine Trägerplatte;
- Einbringen der Trägerplatte mit der Probe in die Aufnahmeeinrichtung;
- Kühlen der Probe in der Kühleinrichtung auf eine Temperatur von 0°C oder weniger;
- optional Befördern der Probe von der Kühleinrichtung zur Schnitteinheit;
- sukzessives Schneiden der Probe mit der Schnitteinheit zur Herstellung einer Vielzahl von Schnitten, wobei die Probe mit der Schnitteinheit komplett geschnitten wird;
- matrixartiges Übertragen von allen der Vielzahl von Schnitten mit der Übertrageeinheit auf einen Träger; und
- Analysieren der Vielzahl von Schnitten der Probe mit der mindestens einen Analyseeinrichtung und Erstellung eines Analyseergebnisses, wobei das Analyseergebnis mit einer Auswerteeinheit automatisch ausgewertet wird und ein Auswertungsergebnis erstellt wird, optional wobei ein Report des Auswertungsergebnisses mit einer Reporteinrichtung ausgegeben wird.

Durch das erfindungsgemäße Verfahren kann eine Probe automatisch geschnitten und analysiert werden, und es kann eine dreidimensionale Analyse und auch Auswertung einer Probe durchgeführt werden. Das erfindungsgemäße Verfahren ist nicht besonders beschränkt, sofern es mit Hilfe der erfindungsgemäßen Vorrichtung und entsprechend den obigen Schritten erfolgt. Insbesondere finden die im erfindungsgemäßen Verfahren angegebenen Schritte in der angegeben Reihenfolge statt, wobei jedoch nicht ausgeschlossen ist, dass zwischen zwei Schritten auch ein weiterer Schritt oder mehrere weitere Schritte, etwa ein Zugabeschritt mindestens eines Reagens, ein Aufbringen einer Schutzschicht, etc. durchgeführt werden. Da das erfindungsgemäße Verfahren durch die erfindungsgemäße Vorrichtung durchgeführt werden kann, können auch Ausführungsformen, die im Zusammenhang mit dem erfindungsgemäßen Verfahren offenbart werden, auch auf die erfindungsgemäße Vorrichtung Anwendung finden, so diese eine strukturelle Konsequenz bei der Vorrichtung haben, z.B. hinsichtlich der Anordnung der Bestandteile der Vorrichtung.

Im erfindungsgemäßen Verfahren ist das Bereitstellen der Probe des Patienten nicht besonders beschränkt, und auch die Art der Probe ist nicht besonders beschränkt. Die Probe kann hier beispielsweise auch überbracht werden oder auf andere Weise geliefert werden.

Auch das Positionieren der Probe auf einer Trägerplatte ist erfindungsgemäß nicht besonders beschränkt, wobei die Trägerplatte wie oben dargelegt ausgestaltet sein kann. Die Trägerplatte, die in der erfindungsgemäßen Vorrichtung verwendet werden kann bzw. im erfindungsgemäßen Verfahren Anwendung findet, oder auch ein Bestandteil der Vorrichtung sein kann, ist nicht besonders beschränkt. Es kann sich hierbei auch um eine Schale (tray) handeln, aber auch eine Platte, einen Objektträger, etc. Das Material der Trägerplatte ist erfindungsgemäß nicht besonders beschränkt. Gemäß bestimmten Ausführungsformen umfasst die Trägerplatte zumindest teilweise ein Metall und/oder eine Legierung oder besteht aus einem Metall und/oder eine Legierung, um den Wärmewiderstand zu verringern, wobei das Metall und/oder die Legierung nicht besonders beschränkt sind und beispielsweise Fe, Sn, Cu, Al und/oder Legierungen davon umfasst. Ebenso oder alternativ kann die Trägerplatte gemäß bestimmten Ausführungsformen eine geringe Dicke, z.B. von 5 mm oder weniger, bevorzugt 3 mm oder weniger, weiter bevorzugt 2 mm oder weniger z.B. 1 mm oder weniger oder 0,5 mm oder weniger, aufweisen, um eine gute Kühlung zu ermöglichen. Gemäß bestimmten Ausführungsformen kann die Probe auf der Trägerplatte in einer bestimmten Position angebracht werden, beispielsweise unter Verwendung einer haftenden Oberfläche der Probe o.Ä.

Weiterhin ist das Einbringen der Trägerplatte mit der Probe in die Aufnahmeeinrichtung nicht besonders beschränkt, und kann beispielsweise manuell, also beispielsweise durch einen Benutzer des Systems, oder auch automatisch.

Zudem ist das Kühlen der Probe in der Kühleinrichtung nicht besonders beschränkt, sofern es auf eine Temperatur von 0°C oder weniger erfolgt, z.B. weniger als 0°C. Das Kühlen kann lokal oder auch in der gesamten Vorrichtung erfolgen. Gemäß bestimmten Ausführungsformen wird die Trägerplatte mit der Probe auf eine Temperatur von -5°C oder weniger, bevorzugt - 10°C oder weniger, weiter bevorzugt -15°C oder weniger, z.B. -20°C oder weniger, gekühlt. Die exakte Temperatur von null Grad Celsius oder weniger hängt dabei beispielsweise von der diagnostischen Aufgabe und/oder der mechanischen und ggf. chemischen Verarbeitung in den folgenden Schritten ab. Auch kann eine Kühlung der Trägerplatte mit der Probe mit mehreren Kühleinrichtungen stufenweise erfolgen. Auch können weitere Bestandteile der Vorrichtung gekühlt werden, z.B. die Schnitteinheit oder Teile davon, z.B. die Klinge eines Mikrotoms, und/oder der optionale Fördermechanismus.

Das optionale Befördern der Probe von der Kühleinrichtung zur Schnitteinheit ist ebenfalls nicht besonders beschränkt und erfolgt insbesondere mit einem geeigneten Fördermechanismus, beispielsweise ein Förderband, ein Greifarm, ein Schlitten, etc. Hierbei ist auch gemäß bestimmten Ausführungsformen eine abschnittsweise Beförderung denkbar, z.B. zu verschiedenen Teilen der Vorrichtung, wie oben zur Vorrichtung beispielhaft dargelegt. Es können auch mehrere Fördermechanismen vorgesehen sein, z.B. auch zur Beförderung mindestens eines Schnitts der Probe, ggf. auf einem Träger, zu mindestens einer Analyseeinrichtung. Gemäß bestimmten Ausführungsformen wird ein Befördern der Probe von der Kühleinrichtung zur Schnitteinheit durchgeführt.

Das Schneiden der Vielzahl von Schnitten der Probe mit der Schnitteinheit ist ebenfalls nicht besonders beschränkt und kann auf geeignete Weise erfolgen, beispielsweise mechanisch erfolgen, z.B. mit einem Messer, wie in einem Schlittenmikrotom oder einem Rotationsmikrotom, und/oder der Schnitt kann auf andere Weise erfolgen, z.B. mit einem Laser. Es können Schnitte von beliebiger Dicke von der Probe geschnitten werden, wobei die Schnitte hinsichtlich der Schnittrichtung nicht besonders beschränkt sind, und die Schnitte beispielsweise vertikal, schräg oder horizontal erfolgen können. Die Schnittdicke kann beispielsweise in einem Bereich von 0,1 - 30 um, bevorzugt 0,5 bis 20 um, insbesondere 1 bis 10 um betragen, wobei diese geeignet eingestellt werden kann, beispielsweise durch einen entsprechenden Vortrieb zumindest eines Teils des optionalen Fördermechanismus und/oder eine geeignete Bewegung der Schnitteinheit.

Es wird eine Vielzahl von Schnitten, also 2, 3, 4, 5, 6, 7, 8, 9, 10 oder mehr, 20 oder mehr, 50 oder mehr, oder 100 oder mehr, hergestellt, welche auf einen Träger, übertragen wird. Es wird mit der Schnitteinheit eine Vielzahl von Schnitten hergestellt, welche übertragen und ausgewertet werden.

Die Herstellung der Vielzahl von Schnitten erfolgt hierbei durch sukzessives Schneiden der Probe. Hierbei entstehen bei Probengrößen im Millimeter- bis Zentimeter-Bereich einige Hundert bis einige tausend Gewebeschnitte, z.B. bei einer Dicke der Schnitte von 1 bis 10 um. Es werden alle Schnitte auf einen Träger übertragen, und dann mit der mindestens einen Analyseeinrichtung analysiert. Hierdurch kann die Probe dreidimensional und im Wesentlichen vollständig oder vollständig untersucht werden.

Das Übertragen der Vielzahl von Schnitten mit der Übertrageeinheit auf einen Träger ist ebenfalls nicht besonders beschränkt, wobei der Träger nicht besonders beschränkt ist und beispielsweise ein Objektträger sein kann. Der Träger kann aus einem beliebigen Material bestehen, z.B. aus Glas und/oder Kunststoff, wobei der Träger bevorzugt im Wesentlichen nicht oder nicht mit einer Analyse in der mindestens einen Analyseeinrichtung interferiert, z.B. für eine bestimmte Beobachtungswellenlänge bei einer optischen Analyse undurchlässig ist.

Es wird eine Vielzahl von Schnitten auf einen Träger matrixartig übertragen. Dies kann beispielsweise über eine "Pick and Place" Mechanik erfolgen. Hierbei ist bevorzugt der Träger größer ausgebildet, um für die Vielzahl von Schnitten entsprechend Platz zu haben, beispielsweise mit einer Größe von mehreren bis mehreren 10 Quadratzentimetern.

Zudem sind das Analysieren der Vielzahl der Schnitte der Probe mit der mindestens einen Analyseeinrichtung und das Erstellung eines Analyseergebnisses nicht besonders beschränkt. Beispielsweise kann mindestens eine optische Analyse der Vielzahl von Schnitten erfolgen, z.B. mit mindestens einer Wellenlänge oder einem Wellenlängenbereich, bevorzugt mehreren Wellenlängen oder mehreren Wellenlängenbereichen, welche nicht besonders beschränkt sind. Neben sichtbarem Licht kommen beispielsweise auch spektrale Bänder im Infraroten und UV in Frage. Das Analysieren ist jedoch nicht auf eine optische Analyse beschränkt.

Das Analyseergebnis wird mit einer Auswerteeinheit automatisch ausgewertet und ein Auswertungsergebnis erstellt. Das Auswerten ist hierbei nicht besonders beschränkt. Beispielsweise kann ein Auswerten eine Mustererkennung umfassen, wobei insbesondere bei einer Vielzahl von Schnitten auch Muster aus benachbarten Schnitten bei der Mustererkennung einbezogen werden können und/oder ein Algorithmus hier das Nebeneinanderliegen von Schnitten in die Auswertung mit einbezieht.

Gemäß bestimmten Ausführungsformen wird ein Report des Auswertungsergebnisses mit einer Reporteinrichtung ausgegeben. Der Report kann beispielsweise von der Auswerteeinheit automatisch generiert werden und beispielsweise als Daten auf beliebige Art und Weise mit Hilfe der Reporteinrichtung ausgegeben werden, beispielsweise in Form einer Darstellung auf einem Bildschirm und/oder in Form eines Ausdrucks, etc. Der Report kann mit Hilfe der Reporteinrichtung beispielsweise in Zusammenfassung und/oder als optische ja/nein Information an der Vorrichtung gezeigt und optional in digitaler Form an entsprechende Systeme übermittelt werden.

Gemäß bestimmten Ausführungsformen wird nach dem Übertragen der Vielzahl von Schnitten mit der Übertrageeinheit auf den einen Träger eine Schutzschicht auf den Schnitt auf dem Träger mit einer Auftrageeinheit aufgetragen. Das Auftragen einer Schutzschicht ist hierbei nicht besonders beschränkt. Mit dem Auftrag einer Schutzschicht kann die Vielzahl von Schnitten auf dem Träger langzeitstabil gehalten werden und gleichzeitig können z.B. infektiöse Anteile aus Gewebeflüssigkeiten (z.B. Bakterien oder HIV-Viren) sicher isoliert und abgetötet werden. Auch kann hierbei die Vielzahl von Schnitten zusätzlich auf dem Träger fixiert werden. Die Schutzschicht ist hierbei nicht besonders beschränkt, ist jedoch bevorzugt derart vorgesehen, dass sie mit einer Analyse in der Analyseeinrichtung im Wesentlichen nicht interferiert oder bevorzugt nicht interferiert. So ist beispielsweise ein Polymerfilm als Schutzschicht geeignet, der bevorzugt im Wesentlichen transparent für sichtbares Licht, UV-Licht und/oder Infrarot-Licht ist.

Gemäß bestimmten Ausführungsformen werden zumindest Teile der Vorrichtung, welche mit der Probe in Berührung kommen, mit mindestens einer Desinfektionseinheit desinfiziert, wobei die Desinfektion nicht besonders beschränkt ist. Auch können weitere Teile der erfindungsgemäßen Vorrichtung desinfiziert werden. Beispielsweise kann eine Desinfektion mit einem UV-Gerät und/oder einem Plasma-Gerät wie einer UV- und/oder Plasmalampe, einem UV- und/oder Plasma-Laser, einer chemische Desinfektionseinheit, etc. erfolgen. Mit der Desinfektion, z.B. einer Plasma- und/oder UV-Exposition, in der Vorrichtung können beispielsweise die Trägerplatte, der mindestens eine Träger, und/oder Bestandteile der Vorrichtung wie z.B. die Schnitteinheit, die optionale Übertrageeinheit, ggf. die mindestens eine Kühleinrichtung und/oder ggf. die mindestens eine Analyseeinrichtung desinfiziert bzw. gereinigt werden.

Gemäß bestimmten Ausführungsformen wird nach dem Übertragen der Vielzahl von Schnitten mit der Übertrageeinheit auf den einen Träger mindestens ein Reagens auf den mindestens einen Schnitt mit mindestens einer Zuführeinrichtung für das mindestens eine Reagens aufgetragen, bevor die Vielzahl von Schnitten in der Analyseeinrichtung analysiert wird. Das mindestens eine Reagens ist hierbei nicht besonders beschränkt und umfasst beispielsweise Färbereagenzien, z.B. solche, welche üblicherweise in der Histopathologie Anwendung finden, wie etwa Hämatoxylin und/oder Eosin z.B. in der HE-Färbung), die Reagenzien bei der Azanfärbung (Mallory-Trichrom-Färbung), der Van-Gieson-Färbung und/oder der Masson-Goldner-Trichrom-Färbung, etc. Die Probe kann also beispielsweise mit einer gewünschten Färbung versehen werden. So eine Schutzschicht aufgetragen wird, erfolgt das Auftragen des mindestens einen Reagens auf die Vielzahl von Schnitte vor dem Auftragen der Schutzschicht.

Gemäß bestimmten Ausführungsformen können bestimmte Parameter des erfindungsgemäßen Verfahrens, z.B. eine Kühltemperatur, eine Schnittdicke, eine ggf. Reagenzzugabe, z.B. eine Färbung, eine bestimmte Auswertung, und/oder eine bestimmte Art der Auswertung und/oder Anzeige davon, mit einem Bedienfeld in die Vorrichtung eingegeben werden, und/oder bestimmte Schritte des Verfahrens wie etwa das Kühlen der Probe mit einem Bedienfeld und/oder einem Knopf an der Vorrichtung gestartet werden. Hierbei kann beispielsweise auch angegeben werden, dass eine Vielzahl von Schnitten durchgeführt werden soll, also eine 3D-Analyse der Probe durchgeführt werden soll, z.B. eine 3D-Tumoranalyse, z.B. bei einem frisch resektierten Tumorgewebe. Auch kann eine automatische Mitteilung in der Vorrichtung erfolgen, ob die Probe eine gewünschte Qualität aufweist.

Ein beispielhaftes erfindungsgemäßes Verfahren ist schematisch in Fig. 2 gezeigt. In einem ersten Schritt erfolgt hierbei ein Bereitstellen der Probe 11, wonach sich ein Positionieren der Probe auf eine Trägerplatte 12 anschließt. Nach einem Einbringen der Trägerplatte mit der Probe in eine Aufnahmeeinrichtung 13 erfolgt ein Kühlen der Probe 14, gefolgt von einem Befördern der Probe zur Schnitteinheit 15. Dort erfolgt ein Schneiden einer Vielzahl von Schnitten der Probe 16, und dann ein Analysieren der Vielzahl von Schnitten der Probe 17. Auch hierbei ist nicht ausgeschlossen, dass weitere Schritte vollzogen werden, wie oben dargelegt.

Daneben betrifft die vorliegende Erfindung auch die Verwendung der erfindungsgemäßen Vorrichtung für eine Analyse einer Probe, insbesondere für eine Schnellschnittanalyse, bevorzugt eine dreidimensionale Analyse einer Probe.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

Ein beispielhaftes erfindungsgemäßes Verfahren ist in Figur 3 gezeigt.

Figur 3 zeigt den Aufbau und Prozessablauf eines vollständig automatisierten Gerätes für dreidimensionale histologische Untersuchungen, hier mit beispielsweise 4 Verarbeitungskammern in der beispielhaften Vorrichtung, wie nachstehend ausgeführt.

In einem ersten Schritt des Positionierens einer Probe 101 wird eine Probe 110, beispielsweise eine Gewebeprobe, z.B. umfassend einen Tumor, auf eine Trägerplatte 111, beispielsweise von einem menschlichen Bediener positioniert und in die Vorrichtung auf einen Kühleinrichtung 112, beispielsweise einen Peltier-Kühler, eingebracht. Die Trägerplatte 111 kann hier beispielsweise eine Aluminiumschale sein. Es erfolgt ein Kühlen der Probe 102, beispielsweise auf unter null Grad Celsius, mit der Kühleinrichtung 112. Wie bei einem Schnellschnitt ist das Ziel, die Probe 110 durch Einfrieren schnittfähig zu machen. Ein Fördermechanismus bringt die Trägerplatte 111 samt Probe 110 anschließend zum nächsten Prozessschritt, dem Schneiden der Probe 103 mittels einer Schnitteinheit 113, z.B. einem Mikrotom. Beispielsweise erfolgt das Schneiden von einer Vielzahl von 1 - 10 um dicken Schnitten 110a, wobei die gesamte Probe 110 sukzessive geschnitten wird. Damit entstehen bei Probengrößen im Millimeter- bis Zentimeter-Bereich einige Hundert bis einige tausend Gewebeschnitte.

Eine Vielzahl von Schnitten 110a, wird über eine "Pick and Place" Mechanik matrixartig auf einen Träger 114 (Größe mehrere bis mehrere 10 Quadratzentimeter) aufgebracht und in einem Färben von Schnitten der Probe 104 mit einer Färbung aus dem Dispener 115 versehen, wobei hier die Färbung auch einige Minuten einwirken kann, je nach Farbstoff. Ggf. können die Schnitte mit einer Schutzschicht überzogen werden (nicht gezeigt). In einer Analyse 105 wird mit einer digitalen mikroskopischen Kamera 116 ein Bild aufgenommen in mindestens einem, idealerweise mehreren Wellenlängenbereichen. Neben sichtbarem Licht kommen auch spektrale Bänder im Infraroten und UV in Frage. Die Bilddaten werden einer Mustererkennungs-Software in einem Prozessor 117, beispielsweise umfassend künstliche Intelligenz, digital zugeführt und einem Auswerten 106 unterzogen, wobei beispielsweise eine Pathologie auch dreidimensional bestimmt werden kann. Die Bilddaten werden insbesondere mit hoher Geschwindigkeit mittels Verfahren der Mustererkennung bzw. künstlichen Intelligenz ausgewertet. Es folgt ein Report 107, welcher beispielsweise auf einem Bildschirm 118 als digitaler Report der Vorrichtung angezeigt werden kann, aber auch digital weitergereicht werden kann, z.B. an einen Pathologen und/oder einen Operateur.

Vorteilhaft ist es, die Probe komplett zu schneiden und zu analysieren. Die Histologie wird damit dreidimensional und anders als in der gängigen Praxis prinzipiell vollständig durchgeführt. Damit können Pathologien und Zellverteilungen in der gesamten Probe diagnostiziert werden. Somit wird die vollständige dreidimensionale Auswertung der Probe möglich.

Dabei kann insbesondere eine Auswertung mit künstlicher Intelligenz bestimmen, dass bei einem Befund in einem Schnitt auch die Nachbarschnitte eine höhere Befundwahrscheinlichkeit vorliegt. Dies kann so weit gehen, dass man zu einer dreidimensionalen Mustererkennung gelangt, ein Schritt, der technisch und diagnostisch mit dem Schritt von der Schnitt CT zur tomografischen 3D CT vergleichbar wäre.

In einer bevorzugten Ausführungsform kann beim Einbringen der Probe durch einen Bediener nach dem Positionieren der Probe 101 der Start der Analyse durch einen Knopf mit Arbeitsauftrag ausgeführt werden, also z.B. "3D Tumoranalyse" bei einem frisch resektierten Tumorgewebe. Die medizinischen Fragestellungen können dabei die genaue Klassifikation des Tumors und seine vollständige Entfernung sein. Unter dieser Zielsetzung kann eine dreidimensionale Vermessung der Tumorentität inkl. Zellcharakterisierung und der gesunden Ränder vorgenommen werden. Nur wenn hinreichend Abstand der Tumorgrenzen von den Schnittkanten ermittelt wurde, liefert die Analyse ein "grünes Licht", dass in der Zusammenfassung am Gerät auch im wörtlichen Sinne angezeigt werden kann.

Mit der erfindungsgemäßen Vorrichtung und dem erfindungsgemäßen Verfahren kann insbesondere eine vollständige und automatisierte Durchführung des histopathologischen Prozesses in einem einzelnen autarken Gerät, ggf. mit Verbrauchsmaterialien, durchgeführt werden.

Gemäß bestimmten Ausführungsformen ergeben sich hierbei insbesondere die folgenden Vorteile.

Es kann eine dreidimensionale und prinzipiell vollständige Auswertung der Probe erzielt werden (medizinischer USP (unique selling point)). Zudem ist eine automatisierte, standardisierte Durchführung mit hoher Geschwindigkeit möglich (prozessualer USP). Die Durchführung ist kostengünstig, da der menschliche Befunder als Zeitlimitation wegfallen kann (wirtschaftlicher USP). Der Pathologe kann dann seine medizinische Tätigkeit auf höherwertige Ziele wie schwierige Fälle (z.B. von der Auswertung, insbesondere einer künstlichen Intelligenz, vorgelegt) oder das Therapieren der gefundene Pathologie konzentrieren (arbeitsrelevanter USP). Mit der erfindungsgemäßen Vorrichtung ist zudem eine vollständige digitale Anbindung an weitere medizinische und/oder diagnostische Systeme wie PathoPACS oder EMR möglich, womit auch Arbeit von Zuhause oder unterwegs für Pathologen möglich werden (arbeitsrelevanter USP). Durch eine Standardisierung können zudem Laborkosten für die pathologischen Betreiber sinken, wobei sich eine Flächenreduktion und ein Fokus auf wenige und dafür häufig gebrauchte Verbrauchsmittel, etc. ergeben können.

## Patentansprüche

1. Vorrichtung zur Analyse einer Probe (110) eines Patienten, umfassend:
- eine Aufnahmeeinrichtung (1) für eine Trägerplatte (6; 111), auf der die Probe (110) positioniert werden kann, die dazu ausgebildet ist, eine Trägerplatte (6; 111) mit einer darauf positionierten Probe (110) aufzunehmen;
- mindestens eine Kühleinrichtung (2; 112), die dazu ausgebildet ist, die Trägerplatte (6; 111) mit der Probe (110) auf eine Temperatur von 0°C oder weniger zu kühlen, um bevorzugt eine gefrorene Probe herzustellen;
- optional einen Fördermechanismus (3) zur Beförderung der Trägerplatte (6; 111) mit der gefrorenen Probe von der Kühleinrichtung (2; 112) zu einer Schnitteinheit (4; 113), der dazu ausgebildet ist, die Trägerplatte (6; 111) mit der gefrorenen Probe von der Kühleinrichtung (2; 112) zur Schnitteinheit (4; 113) zu befördern;
- eine Schnitteinheit (4; 113), die dazu ausgebildet ist, eine Vielzahl von Schnitten (110a) der Probe herzustellen und die Probe sukzessive zu schneiden, wobei die Schnitteinheit (4; 113) dazu ausgebildet ist, die Probe komplett zu schneiden;
- eine Übertrageeinheit, die dazu ausgebildet ist, die Vielzahl von Schnitten (110a) alle auf einen Träger (114) matrixartig zu übertragen; und
- mindestens eine Analyseeinrichtung (5), die dazu ausgebildet ist, die Vielzahl von Schnitten zu analysieren und ein Analyseergebnis zu erstellen,
weiter umfassend eine Auswerteeinheit, die dazu ausgebildet ist, das Analyseergebnis auszuwerten, optional umfassend eine Reporteinrichtung, welche dazu ausgebildet ist, einen Report des Analyseergebnisses auszugeben,
wobei die Auswerteeinheit dazu ausgebildet ist, bei der Auswertung eines Schnitts auch Daten von einer Auswertung eines benachbarten Schnitts in Betracht zu nehmen, und die Vielzahl von Schnitten mittels Verfahren der dreidimensionalen Mustererkennung auszuwerten.

2. Vorrichtung nach Anspruch 1, wobei die mindestens eine Kühleinrichtung (2), die dazu ausgebildet ist, die Trägerplatte (6; 111) mit der Probe (110) auf eine Temperatur von 0°C oder weniger zu kühlen, mindestens ein Peltier-Kühler ist.

3. Vorrichtung nach einem der vorgehenden Ansprüche, wobei die Auswerteeinheit dazu ausgebildet ist, die Vielzahl von Schnitten unter Verwendung von künstlicher Intelligenz auszuwerten.

4. Vorrichtung nach einem der vorgehenden Ansprüche, weiter umfassend mindestens eine Auftrageeinheit für eine Schutzschicht, die dazu ausgebildet ist, eine Schutzschicht auf die Vielzahl von Schnitten (110a) auf dem einen Träger (114) aufzutragen.

5. Vorrichtung nach einem der vorgehenden Ansprüche, weiter umfassend mindestens eine Desinfektionseinheit, die dazu ausgebildet ist, zumindest Teile der Vorrichtung, welche mit der Probe in Berührung kommen, zu desinfizieren.

6. Vorrichtung nach einem der vorgehenden Ansprüche, weiter umfassend mindestens eine Zuführeinrichtung für mindestens ein Reagens, die dazu ausgebildet ist, mindestens ein Reagens auf die Vielzahl von Schnitte (110a) aufzutragen, bevor die Vielzahl von Schnitten (110a) in der Analyseeinrichtung (5) analysiert wird.

7. Verfahren zur Analyse einer Probe (110) eines Patienten mit Hilfe einer Vorrichtung nach einem der vorgehenden Ansprüche, umfassend:
- Bereitstellen der Probe (11; 101) des Patienten;
- Positionieren der Probe (12) auf eine Trägerplatte (6; 111);
- Einbringen der Trägerplatte (6; 111) mit der Probe (13) in die Aufnahmeeinrichtung (1);
- Kühlen der Probe (14; 102) in der Kühleinrichtung (2; 112) auf eine Temperatur von 0°C oder weniger;
- optional Befördern der Probe (15) von der Kühleinrichtung (2; 112) zur Schnitteinheit;
- sukzessives Schneiden der Probe (16; 103) mit der Schnitteinheit (4: 113) zur Herstellung einer Vielzahl von Schnitten (110a), wobei die Probe mit der Schnitteinheit (4; 113) komplett geschnitten wird;
- matrixartiges Übertragen von allen der Vielzahl von Schnitten (110a) mit der Übertrageeinheit auf einen Träger (114); und
- Analysieren der Vielzahl von Schnitten der Probe (17; 105) mit der mindestens einen Analyseeinrichtung (5) und Erstellung eines Analyseergebnisses, wobei das Analyseergebnis mit einer Auswerteeinheit automatisch ausgewertet (106) wird und ein Auswertungsergebnis erstellt wird, optional wobei ein Report (107) des Auswertungsergebnisses mit einer Reporteinrichtung ausgegeben wird,
wobei bei der Auswertung eines Schnitts auch Daten von einer Auswertung eines benachbarten Schnitts in Betracht genommen werden, und die Auswertung mittels Verfahren der dreidimensionalen Mustererkennung erfolgt.

8. Verfahren nach Anspruch 7, wobei die Auswertung unter Verwendung von künstlicher Intelligenz erfolgt.

9. Verfahren nach einem der Ansprüche 7 und 8, wobei nach dem Übertragen der Vielzahl von Schnitte (110a) mit der Übertrageeinheit auf den einen Träger (114) eine Schutzschicht auf die Vielzahl von Schnitte auf dem Träger (114) mit einer Auftrageeinheit aufgetragen wird.

10. Verfahren nach einem der Ansprüche 7 bis 9, wobei zumindest Teile der Vorrichtung, welche mit der Probe in Berührung kommen, mit mindestens einer Desinfektionseinheit desinfiziert werden.

11. Verfahren nach einem der Ansprüche 7 bis 10, wobei nach dem Übertragen der Vielzahl von Schnitten (10a) mit der Übertrageeinheit auf den einen Träger (114) mindestens ein Reagens auf die Vielzahl von Schnitten mit mindestens einer Zuführeinrichtung für das mindestens eine Reagens aufgetragen wird, bevor die Vielzahl von Schnitten (110a) in der Analyseeinrichtung (5) analysiert wird.

## Claims

1. Apparatus for analysing a sample (110) of a patient, comprising:
- a receiving facility (1) for a carrier plate (6; 111), on which the sample (110) can be positioned, which receiving facility is embodied to receive a carrier plate (6; 111) with a sample (110) positioned thereupon;
- at least one cooling facility (2; 112), which is embodied to cool the carrier plate (6; 111) with the sample (110) to a temperature of 0°C or less, in order preferably to produce a frozen sample;
- optionally a conveyor mechanism (3) for conveying the carrier plate (6; 111) with the frozen sample from the cooling facility (2; 112) to a sectioning unit (4; 113), which conveyor mechanism is embodied to convey the carrier plate (6; 111) with the frozen sample from the cooling facility (2; 112) to the sectioning unit (4; 113);
- a sectioning unit (4; 113), which is embodied to produce a plurality of sections (110a) of the sample and to section the sample successively, wherein the sectioning unit (4; 113) is embodied to section the sample completely;
- a transfer unit, which is embodied to transfer the plurality of sections (110a) all to a carrier (114) in a matrix-type manner; and
- at least one analysis facility (5), which is embodied to analyse a plurality of sections and to create an analysis result,
further comprising an evaluation unit, which is embodied to evaluate the analysis result, optionally comprising a report facility which is embodied to output a report of the analysis result,
wherein the evaluation unit is embodied, when a section is evaluated, also to take into account data from an evaluation of an adjacent section and to evaluate the plurality of sections by means of three-dimensional pattern recognition methods.

2. Apparatus according to claim 1, wherein the at least one cooling facility (2), which is embodied to cool the carrier plate (6; 111) with the sample (110) to a temperature of 0°C or less, is at least one Peltier cooler.

3. Apparatus according to one of the preceding claims,
wherein the evaluation unit is embodied to evaluate the plurality of sections using artificial intelligence.

4. Apparatus according to one of the preceding claims, further comprising at least one application unit for a protective layer, which is embodied to apply a protective layer to the plurality of sections (110a) on the one carrier (114).

5. Apparatus according to one of the preceding claims, further comprising at least one disinfection unit, which is embodied to disinfect at least parts of the apparatus which come into contact with the sample.

6. Apparatus according to one of the preceding claims, further comprising at least one supply facility for at least one reagent, which is embodied to apply at least one reagent to the plurality of sections (110a) before the plurality of sections (110a) is analysed in the analysis facilty (5).

7. Method for analysing a sample (110) of a patient with the aid of an apparatus according to one of the preceding claims, comprising:
- providing the sample (11; 101) of the patient;
- positioning the sample (12) on a carrier plate (6; 111) ;
- introducing the carrier plate (6; 111) with the sample (13) into the receiving facility (1);
- cooling the sample (14; 102) in the cooling facility (2; 112) to a temperature of 0°C or less,
- optionally conveying the sample (15) from the cooling facilty (2; 112) to the sectioning unit;
- successively sectioning the sample (16; 103) with the sectioning unit (4; 113) in order to produce a plurality of sections (110a), wherein the sample is completely sectioned with the sectioning unit (4; 113);
- matrix-type transferring of all of the plurality of sections (110a) with the transfer unit onto a carrier (114); and
- analysing the plurality of sections of the sample (17; 105) with the at least one analysis facilty (5) and creating an analysis result, wherein the analysis result is automatically evaluated (106) with an evaluation unit and an evaluation result is created, wherein optionally a report (107) of the evaluation result is output with a report facility,
wherein with the evaluation of a section, data from an evaluation of an adjacent section is also taken into account and the evaluation is carried out by means of three-dimensional pattern recognition methods.

8. Method according to claim 7, wherein the evaluation is carried out using artificial intelligence.

9. Method according to one of claims 7 and 8, wherein after the plurality of sections (110a) has been transferred with the transfer unit onto the one carrier (114), a protective layer is applied to the plurality of sections on the carrier (114) with an application unit.

10. Method according to one of claims 7 to 9, wherein at least parts of the apparatus, which come into contact with the sample, are disinfected with at least one disinfection unit.

11. Method according to one of claims 7 to 10, wherein after the plurality of sections (10a) has been transferred with the transfer unit onto the one carrier (114), at least one reagent is applied to the plurality of sections with at least one supply facility for the at least one reagent, before the plurality of sections (110a) is analysed in the analysis facility (5).

## Revendications

1. Installation d'analyse d'un échantillon (110) d'un patient, comprenant :
- un dispositif (1) de réception d'une plaque (6 ; 111) de support, sur laquelle l'échantillon (110) peut être mis en position, qui est constitué pour recevoir une plaque (6 ; 111) de support, sur laquelle un échantillon (110) est mis en position ;
- au moins un dispositif (2 ; 112) de refroidissement, qui est constitué pour refroidir à une température de 0°C ou moins la plaque (6 ; 111) avec l'échantillon (110) et, de préférence, pour préparer un échantillon congelé ;
- éventuellement un mécanisme (3) de transport pour le transport de la plaque (6 ; 111) de support avec l'échantillon congelé du dispositif (2 ; 112) de refroidissement à une unité (4 ; 113) de coupe, qui est constitué pour transporter la plaque (6 ; 111) de support avec l'échantillon congelé du dispositif (2 ; 112) de refroidissement à l'unité (4 ; 113) de coupe ;
- une unité (4 ; 113) de coupe, qui est constituée pour préparer une pluralité de coupes (110a) de l'échantillon et couper l'échantillon en succession, dans laquelle l'unité (4 ; 113) de coupe est constituée pour couper complètement l'échantillon ;
- une unité de transfert, qui est constituée pour transférer la pluralité de coupes (110a) toutes sur un support (114) à la manière d'une matrice ; et
- au moins un dispositif (5) d'analyse, qui est constitué pour analyser la pluralité de coupes et établir un résultat d'analyse, comprenant en outre une unité d'évaluation, qui est constituée pour évaluer le résultat de l'analyse,
comprenant éventuellement un dispositif de compte-rendu, qui est constitué pour émettre un compte-rendu du résultat de l'analyse, dans laquelle l'unité d'évaluation est constituée pour, lors de l'évaluation d'une coupe, prendre en considération également des données d'une évaluation d'une coupe voisine et évaluer la pluralité de coupes au moyen d'un procédé de la reconnaissance de forme en trois dimensions.

2. Installation suivant la revendication 1, dans laquelle le au moins un dispositif (2) de refroidissement est constitué pour refroidir à une température de 0°C ou moins la plaque (6 ; 111) de support avec l'échantillon (110).

3. Installation suivant l'une des revendications précédentes, dans laquelle l'unité d'évaluation est constituée pour évaluer la pluralité de coupes en utilisant l'intelligence artificielle.

4. Installation suivant l'une des revendications précédentes, comprenant en outre au moins une unité de dépôt d'une couche de protection, qui est constituée pour déposer une couche de protection sur la pluralité de coupes (110a) sur le un support (114) .

5. Installation suivant l'une des revendications précédentes, comprenant au moins une unité de désinfection, qui est constituée pour désinfecter au moins des parties de l'installation, qui viennent en contact avec l'échantillon.

6. Installation suivant l'une des revendications précédentes, comprenant en outre au moins un dispositif d'apport d'au moins un réactif, qui est constitué pour déposer au moins un réactif sur la pluralité de coupes (110a), avant que la pluralité de coupes (110a) ne soit analysée dans le dispositif (5) d'analyse.

7. Procédé d'analyse d'un échantillon (110) d'un patient à l'aide d'une installation suivant l'une des revendications précédentes, comprenant :
- préparation de l'échantillon (11 ; 101) du patient ;
- mise en position de l'échantillon (12) sur une plaque (6 ; 111) de support ;
- introduction de la plaque (6 ; 111) de support avec l'échantillon (13) dans le dispositif (1) de réception ;
- refroidissement de l'échantillon (14 ; 102) dans le dispositif (2 ; 112) de refroidissement, jusqu'à une température de 0°C ou moins ;
- transport éventuel de l'échantillon (15) du dispositif (2 ; 112) de refroidissement à l'unité de coupe ;
- découpe successive de l'échantillon (16 ; 103) par l'unité (4 ; 113) de coupe pour la préparation d'une pluralité de coupes (110a), dans lequel on découpe complètement l'échantillon par l'unité (4 ; 113) de coupe ;
- transfert de type en matrice de toutes les coupes de la pluralité de coupes (110a) par l'unité de transfert sur un support (114) ; et
- analyse de la pluralité de coupes de l'échantillon (17 ; 105) par le au moins un dispositif (5) d'analyse et établissement d'un résultat d'analyse, dans lequel on évalue (106) automatiquement le résultat de l'analyse par une unité d'évaluation et on établit un résultat d'évaluation, dans lequel, éventuellement, on émet un compte-rendu (107) du résultat de l'évaluation par un dispositif de compte-rendu,
dans lequel, à l'évaluation d'une coupe, on prend en considération également des données d'une évaluation d'une coupe voisine et l'évaluation s'effectue au moyen d'un procédé de la reconnaissance de forme en trois dimensions.

8. Procédé suivant la revendication 7, dans lequel l'évaluation s'effectue en utilisant l'intelligence artificielle.

9. Procédé suivant l'une des revendications 7 et 8, dans lequel, après le transfert de la pluralité de coupes (110a) par l'unité de transfert sur le un support (114), on dépose une couche de protection sur la pluralité de coupes sur le support (114) par une unité de dépôt.

10. Procédé suivant l'une des revendications 7 à 9, dans lequel on désinfecte au moins les parties de l'installation, qui viennent en contact avec l'échantillon par au moins une unité de désinfection.

11. Procédé suivant l'une des revendications 7 à 10, dans lequel, après le transfert de la pluralité de coupes (10a) par l'unité de transfert sur le un support (114), on dépose au moins un réactif sur la pluralité de coupes par au moins un dispositif d'apport du au moins un réactif, avant d'analyser la pluralité de coupes (110a) dans le dispositif (5) d'analyse.
